(19) Europäisches Patentamt / European Patent Office / Office européen des brevets

(11) **EP 2 136 075 B1**

(12) **EUROPÄISCHE PATENTSCHRIFT**

(45) Veröffentlichungstag und Bekanntmachung des Hinweises auf die Patenterteilung:
**08.07.2015  Patentblatt 2015/28**

(51) Int Cl.:
*F03D 7/02* *(2006.01)*    *F03D 9/02* *(2006.01)*
*H02M 7/5387* *(2007.01)*

(21) Anmeldenummer: **09007254.7**

(22) Anmeldetag: **29.05.2009**

(54) **Ansteuerschaltung und -verfahren  für Wechselrichter von Windenergieanlagen**

Control switch and method for invertors of wind energy assemblies

Circuit et procédé de commande pour onduleurs d'éoliennes

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.06.2008   DE 102008028809**

(43) Veröffentlichungstag der Anmeldung:
**23.12.2009   Patentblatt 2009/52**

(73) Patentinhaber: **Senvion SE
22297 Hamburg (DE)**

(72) Erfinder: **Letas, Heinz-Hermann, Dr.
23701 Süsel (DE)**

(74) Vertreter: **Glawe, Delfs, Moll
Partnerschaft mbB von
Patent- und Rechtsanwälten
Rothenbaumchaussee 58
20148 Hamburg (DE)**

(56) Entgegenhaltungen:
**DE-A1- 10 243 602        US-A- 5 083 039
US-A1- 2006 186 670**

## Beschreibung

Die Erfindung betrifft eine Ansteuerschaltung für Umrichter von Windenergieanlagen umfassend einen Wechselrichter, der mehrere Phasen zum Anschließen eines Generators, insbesondere eines doppelt gespeisten Asynchrongenerators aufweist, und einen mit dem Wechselrichter verbundenen Zwischenkreis. Die Erfindung betrifft ferner ein Verfahren zum Betreiben eines Umrichters mit einer solchen Ansteuerschaltung und eine damit ausgerüstete Windenergieanlage.

Moderne Windenergieanlagen sind drehzahlvariabel ausgeführt. Dies bedeutet, dass der Windrotor mit einer durch die Last bestimmten Drehzahl umläuft und der Generator elektrische Energie mit entsprechend variabler Frequenz erzeugt. Um diese frequenzvariable elektrische Energie in ein festfrequentes Versorgungsnetz einspeisen zu können, ist ein an den Generator angeschlossener Umrichter vorgesehen. Derartige Umrichter umfassen üblicherweise zwei Wechselrichter, von denen einer als Gleichrichter fungiert und die über einen Gleichspannungs- oder Gleichstromzwischenkreis verbunden sind. Hierbei ist es so, dass einer der Wechselrichter mit dem Netz verbunden ist und im Betrieb mit Netzfrequenz beaufschlagt wird (netzseitiger Wechselrichter), während der andere Wechselrichter (maschinenseitiger Wechselrichter) mit dem Generator verbunden ist, wobei die an ihm anliegende Frequenz u.a. von der Drehzahl des Windrotors bestimmt ist. Derartige Umrichter können als Vollumrichter oder als Teil-umrichter ausgeführt sein, letzteres insbesondere in Kombination mit einer doppelt gespeister Asynchronmaschine. Es hat sich gezeigt, dass ein Betrieb im Bereich der Synchrondrehzahl (Synchronpunkt) Probleme aufwirft. Im Bereich um den Synchronpunkt ist die an dem maschinenseitigen Wechselrichter angelegte Frequenz sehr niedrig, und kann im Extremfall genau im Synchronpunkt sogar zum Gleichstrom werden. Durch die niedrigen Frequenzen wechseln sich Phasen mit starker thermischer Belastung und Phasen mit geringer thermischer Belastung nicht mehr genügend schnell ab, wodurch insbesondere die jeweils leitend geschalteten Schaltelemente einer erhöhten thermischen Belastung ausgesetzt sind. Dadurch wird die Lebensdauer der Schaltelemente beeinträchtigt und kann zu deren Ausfall führen. Deshalb wird bei einem Betrieb im Bereich des Synchronpunkts, wenn dementsprechend die am maschinenseitigen Wechselrichter wirkende Frequenz sehr kleine Werte, die bis auf Null herab gehen können, erreichen kann, die zulässige Strombelastung der Schaltelemente verringert. Dies kann dazu führen, dass die zulässige Strombelastung bis zur Hälfte verringert ist. Eine Verringerung des zulässigen Stroms bedeutet auf der mechanischen Seite aber nichts anderes, als dass das zulässige auf den Windrotor wirkende Drehmoment entsprechend stärker begrenzt ist. Folglich ist der regelbare Drehzahlbereich um den Synchronpunkt herum durch das stärker begrenzte, also verringerte Drehmoment eingeschränkt. Dies läuft dem Konzept der drehzahlvariablen Windenergieanlage zuwider und verhindert die Nutzung von Drehzahl/Drehmomentkennlinien mit hohen Drehmomenten über den Synchronpunkt hinweg, wie es z. B. für einen lärmarmen, drehzahlreduzierten Betrieb oder das schnelle Durchfahren von Drehzahlbereichen zur Vermeidung von Turmresonanzen notwendig ist.

Es ist zwar bekannt, bei Leistungsumrichtern insbesondere für Wechselstrommotoren eine Potentialverschiebung bei einzelnen Phasen durchzuführen, so dass sie auf ein Zwischenkreispotential geklemmt werden und damit die Pulsung zeitweise ausgesetzt werden kann (DE-A-102 43 602). Hierbei wird die betragsmäßig größte Phase auf eines der Zwischenkreispotentiale geklemmt, so dass die Pulsung ausgesetzt werden kann. Weiter wird die Phase mit dem betragsmäßig zweitgrößten Potential abhängig von der Phasenlage abwechselnd auf das eine oder andere Zwischenkreispotential geklemmt. Die letztere Phase wird also mit verringerter Schaltfrequenz betrieben. Dies ist zur Ansteuerung von Motoren ausreichend, kann jedoch bei drehzahlvariablen Windenergieanlagen dazu führen, dass beim Betrieb im Bereich der Synchrondrehzahl die Pulsfrequenz der betroffenen Schaltelemente zu weit absinkt und damit die thermische Belastung gerade der Schaltelemente dieser Phase noch erhöht wird. Damit ist dieser bekannte Leistungsumrichter gerade nicht zur Verwendung bei drehzahlvariablen Windenergieanlagen geeignet.

Der Erfindung liegt die Aufgabe zugrunde, ein verbessertes Verfahren zum Betreiben des Umrichters und einen entsprechenden Umrichter für Windenergieanlagen sowie eine damit versehene Windenergieanlage anzugeben, bei welchen dieser Nachteil vermindert ist.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Betreiben eines Umrichters von Windenergieanlagen, der einen Wechselrichter, welcher über mehrere Phasen einen Generator der Windenergieanlage ansteuert, und einen Zwischenkreis mit einer Zwischenkreisspannung zwischen einem oberen und einem unteren Zwischenkreispotential umfasst, wobei der Generator mit Phasenpotentialen variabler Frequenz angesteuert wird, ist erfindungsgemäß vorgesehen ein Berechnen eines Verschiebungswerts zwischen einem extremen Phasenpotential und einem der Zwischenkreispotentiale, Bestimmen eines Abstandswerts des mittleren Phasenpotentials von einem nächsten der Zwischenkreispotentiale, Generieren einer Zusatzspannung mit dem Abstandswert als Amplitude, und Verschieben der Phasen um den Verschiebungswert und Aufaddieren der Zusatzspannung zu dem mittleren Phasenpotential. Unter einem extremen Phasenpotential wird das höchste oder niedrigste Phasenpotential verstanden.

Die Erfindung beruht auf der Erkenntnis, dass die für den Generator wirksamen Spannungen sich aus den Differenzspannungen der Phasenanschlüsse des Wechselrichters, genauer gesagt der Differenzspannungen der Wechselrichterhalbbrücken, ergeben, wobei die absolute Lage der Potentiale an den Phasen des Wechselrichters keine Rolle spielt. Die Erfindung nutzt hierbei aus, dass eine gleichzeitige Verschiebung der Phasenpotentiale des Wechselrichters nach oben oder nach unten zwar zu einer Veränderung der absoluten Lage des Potentials führt, aber keinen Einfluss auf die am Generator wirkende Ausgangsspannung hat, da sich eine absolute Potentialverschiebung bei der Differenzbildung zur Spannungsberechnung herauskürzt. Die Erfindung macht sich diese Erkenntnis nun zunutze, indem im Takt mit der Frequenz die Potentiale des Wechselrichters gleichzeitig verschoben werden. Vorzugsweise geschieht dies abwechselnd nach oben und nach unten, und zwar für jede Halbwelle getrennt, wobei für eine erste Halbwelle ein Hochverschiebungswert zwischen dem oberen Zwischenkreispotential und dem höchsten Phasenpotential und für die zweite Halbwelle ein Runterverschiebungswert zwischen dem unteren Zwischenkreispotential und dem tiefsten Phasenpotential berechnet wird. Weiter wird ein erster und zweiter Abstandswert für das mittlere Phasenpotential berechnet, und zwar jeweils zum höchsten und tiefsten Phasenpotential, wobei daraus ein Minimalabstandswert bestimmt wird, welcher der Generierung der Zusatzspannung zugrundegelegt wird. Dabei werden in der ersten Halbwelle die Phasen um den Hochverschiebungswert nach oben verschoben und die Zusatzspannung zum mittleren Phasenpotential aufaddiert, während in der zweiten Halbwelle die Phasen um den Runterverschiebungswert nach unten verschoben werden und der Zusatzspannungswert vom mittleren Phasenpotential abgezogen wird.

Im einfachsten Fall erfolgt dies durch Festlegung der Absolutpotentiale des Wechselrichters derart, dass ein extremes Phasenpotential (bspw. das tiefste Phasenpotential) identisch wird mit einem Potential des Zwischenkreises (bspw. dessen Massepotential). Für die andere Halbwelle wird ein Verschiebungswert so berechnet, dass das gegenüberliegende extreme Phasenpotential (bspw. das höchste) identisch wird mit dem anderen Potential des Zwischenkreises (bspw. dessen oberem Potential). Durch diese Verschiebung wird erreicht, dass die eine extreme Phase (die mit dem höchsten Potential) mit der oberen Zwischenkreisspannung übereinstimmt; dadurch kann das entsprechende Schaltelement des Wechselrichters durchgeschaltet werden und braucht nicht mehr getaktet zu werden. Die durch Taktung anfallenden Schaltverluste, welche zu einer Erwärmung des Schaltelements führen, werden damit vermieden. Umgekehrt entfällt bei der anschließenden Halbwelle die Verschiebung, und das tiefste Phasenpotential entspricht der unteren Zwischenkreisspannung (bspw. Masse), so dass das entsprechende Schaltelement des Wechselrichters wiederum voll eingeschaltet sein kann und nicht mehr getaktet zu werden braucht. Somit braucht über eine Periode gesehen das Schaltelement für das höchste Phasenpotential und das für das tiefste Phasenpotential jeweils für eine Halbwelle, d. h. die Hälfte der Periodendauer, nicht getaktet zu werden, wodurch sich die Schaltverluste entsprechend halbieren.

Allerdings ist damit für die Schaltelemente des mittleren Phasenpotentials noch nichts gewonnen. Um zusätzlich auch deren thermische Belastung zu verringern, wendet die Erfindung einen Kunstgriff an, indem sie eine Zusatzspannung aufschaltet. Diese ist so gewählt, dass sie in einer der beiden Halbwellen das Potential der mittleren Phase absenkt bis auf das untere Zwischenkreispotential (oder angehoben auf das obere Zwischenkreispotential), wodurch das entsprechende Schaltelement ebenfalls nicht mehr getaktet zu werden braucht; zum Ausgleich wird in der anderen Halbwelle die Zusatzspannung entsprechend aufaddiert (bzw. abgesenkt), so dass sie sich über eine volle Periode hinweg gesehen aufhebt und damit für den Generator praktisch wirkungslos wird. Mit diesem Kunstgriff erreicht es die Erfindung also, dass bei drei Phasen, der niedrigsten, der höchsten und der mittleren, die Einschaltdauer des getakteten Betriebs der Schaltelemente des Wechselrichters halbiert wird. Die Schaltverluste des Wechselrichters halbieren sich dadurch. Da bei der praktischen Ausführung der Umrichter in der Regel die Schaltverluste zumindest im Bereich des Synchronpunkts gegenüber den Leitend-Verlusten der Schaltelemente dominieren, wirkt sich die erfindungsgemäße Verringerung der Schaltverluste signifikant auf die thermische Belastung der Schaltelemente aus. Dank der verringerten thermischen Belastung kann der Stromfluss im Gegenzug erhöht werden. Damit kann dank der erfindungsgemäßen Schalttechnik mehr Drehmoment auch im Bereich des Synchronpunkts übertragen werden. Die Erfindung erreicht dies praktisch allein durch die besondere Ansteuerung der Schaltelemente und mit dem vernachlässigbaren zusätzlichen Hardwareaufwand für die Gewinnung der Zusatzspannung, und bewirkt damit auf verblüffend einfache Weise eine deutliche Erhöhung der Strombelastbarkeit des Umrichters im Synchronpunkt.

Unter Synchronpunkt wird ein Betriebspunkt verstanden, bei dem die Frequenz am Rotor des Generators praktisch Null beträgt, so dass der Generator mit Synchrondrehzahl rotiert. Dabei leitet sich die Synchrondrehzahl aus der Netzfrequenz und der Polpaarzahl ab; für einen typischen Asynchrongenerator ergeben sich 1500 1/min bei 50Hz. Dabei kann die Synchrondrehzahl je nach Generatorbauart und Netzfrequenz variieren. Unter einem Bereich des Synchronpunkts wird eine Frequenz verstanden, die um etwa 5 Hertz über oder unter dem Synchronpunkt liegt. Genauer gesagt hängt dieser Bereich von dem thermischen Zeitverhalten der Wechselrichterstufe ab und kann in einem Bereich von etwa 0,2Hz bis 5Hz über oder unter dem Synchronpunkt variieren.

Bevorzugt erfolgt die Verschiebung nicht nur während einer Halbwelle, sondern symmetrisch während beider Halbwellen. Dazu wird in der einen Halbwelle die Hochverschiebung, wie vorstehend beschrieben, so weit ausgeführt, dass das höchste Phasenpotential auf den Wert des oberen Zwischenkreispotentials gebracht wird, während in der anderen Halbwelle eine Runterverschiebung so weit erfolgt, dass die Phase mit dem tiefsten Phasenpotential auf den Wert des unteren Zwischenkreispotentials gebracht wird. Für die mittlere Phase wird dementsprechend ein erster und zweiter Abstand zwischen dem mittleren Phasenpotential und dem höchsten bzw. tiefsten Phasenpotential bestimmt, um daraus den kleineren Wert zu wählen (Minimalabstand), und die Zusatzspannung mit diesem Minimalabstandswert als Amplitude zu generieren. Damit wird erreicht, dass durch Aufschalten einer derart bemessenen Zusatzspannung das mittlere Phasenpotential zumindest in einer Halbwelle identisch wird mit dem höchsten bzw. tiefsten Phasenpotential, d. h. identisch wird mit dem oberen oder unteren Zwischenkreispotential, so dass auch das entsprechende Schaltelement des mittleren Phasenpotentials durchschalten kann und nicht mehr getaktet zu werden braucht.

Hierbei wird vorzugsweise die Frequenz der Zusatzspannung so gewählt, dass sie der halben Frequenz der am Generator angelegten Spannung entspricht.

Vorzugsweise ist weiter vorgesehen, dass ein Betrieb im Bereich des Synchronpunkts detektiert wird und daraufhin das erfindungsgemäße Verfahren durchgeführt wird. Damit kann der Umrichter in konventioneller Weise im über- oder untersynchronen Betriebsbereichs betrieben werden, während die erfindungsgemäße Reduktion der Schalttaktungen der Schaltelemente dann zum Zuge kommt, wenn eine kritische thermische Belastung droht, nämlich beim Betrieb im Bereich des Synchronpunkts.

Vorzugsweise wird der Umrichter mit fester Schaltfrequenz betrieben. Dies bietet den Vorteil, dass eine Implementierung des Verfahrens leicht in einer digitalen Regelung mit fester Taktfrequenz erfolgen kann. Besonders bevorzugt ist es, wenn die Regelung synchron getaktet mit der Schaltfrequenz erfolgt. Dank der Erfindung kann damit der Zusammenhang zwischen der Abtastfrequenz der digitalen Regelung und der Schaltfrequenz des Umrichters beibehalten werden, wobei dennoch dank der erfindungsgemäßen Verringerung der Häufigkeit des getakteten Schaltens der einzelnen Schaltelemente die gewünschte erhöhte Strombelastbarkeit erreicht wird.

Die Erfindung bezieht sich ferner auf einen Umrichter für Windenergieanlagen mit einer entsprechenden Ansteuerschaltung, die einen Potentialschieber sowie einen Zusatzspannungsgenerator umfasst. Für die Erläuterung der Funktionsweise und vorteilhafte Weiterbildungen wird auf vorstehende Beschreibung verwiesen. Ferner erstreckt sich die Erfindung auf eine Windenergieanlage mit einem Generator, einer Betriebssteuerung sowie einen erfindungsgemäß betriebenen Wechselrichter, wobei am Umrichter ein Betriebsbereichsmodul mit gesondertem Drehzahl/Drehmoment-Betriebsbereich vorgesehen ist. Das Betriebsbereichsmodul wirkt erfindungsgemäß mit einem Potentialschieber und einem Zusatzspannungsgenerator zusammen. Das Betriebsbereichsmodul ermöglicht es, die Windenergieanlage auch bei verhältnismäßig hohem Drehmoment in einem Betriebspunkt zu betreiben, in dem die Drehzahl im Bereich der Synchrondrehzahl liegt. Eine solche Drehzahl ist häufig günstig in Bezug auf die Lärmemission der Windenergieanlage, und kann dank der erfindungsgemäßen Schaltung auch bei höherer Last verwendet werden, da dank der Erfindung eine Überhitzung der Schaltelemente des Umrichters bei einem Betrieb im Bereich der Synchrondrehzahl nicht mehr zu befürchten ist. Für weitere Einzelheiten wird auf vorstehende Beschreibung verwiesen.

Zweckmäßigerweise ist ein Umschaltmodul vorgesehen, das dazu ausgebildet ist, einen Betrieb im Bereich des Synchronpunkts zu erkennen und ein Signal an das Betriebsbereichsmodul auszugeben, damit dieses erfindungsgemäß auf den gesonderten Betriebsbereich umschaltet, bei dem gegenüber dem normalen Betriebsbereich das erlaubte Drehmoment im Bereich des Synchronpunkts vergrößert ist. Vorzugsweise weist das Umschaltmodul mindestens einen weiteren Eingang für das Drehmoment und/oder die Temperatur von Schaltelementen des Umrichters auf und erkennt, wenn ein Grenzwert erreicht ist. Liegt die Frequenz im Bereich des Synchronpunkts, und ist der Stromsollwert als Maß für das Drehmoment oberhalb des Grenzwerts, wird auf den besonderen Betriebsbereich zur Durchführung des erfindungsgemäßen Verfahrens umgeschaltet. Liegen diese Bedingungen nicht mehr vor, erfolgt ein Rückschalten auf den normalen Betrieb.

Die Erfindung wird nachfolgend unter Bezugnahme auf die beigefügte Zeichnung erläutert, in der ein vorteilhaftes Ausführungsbeispiel der Erfindung dargestellt ist. Es zeigen:

Fig. 1     eine Windenergieanlage gemäß einem Ausführungsbeispiel der Erfindung;

Fig. 2     ein Schaltbild eines an einen Generator angeschlossenen Wechselrichters der Windenergieanlage gemäß Fig. 1;

Fig. 3     Schaltdiagramme zur Ansteuerung von Schaltelementen des Wechselrichters gemäß Fig. 2;

Fig. 4     Schaltdiagramme zu Schaltelementen gemäß Fig. 3;

Fig. 5     ein Schemadiagramm einer erfindungsgemäßen Ansteuerung der Schaltelemente gemäß Fig. 3; und

Fig. 6     ein Schemadiagramm eines Umschaltmoduls für den Wechselrichter.

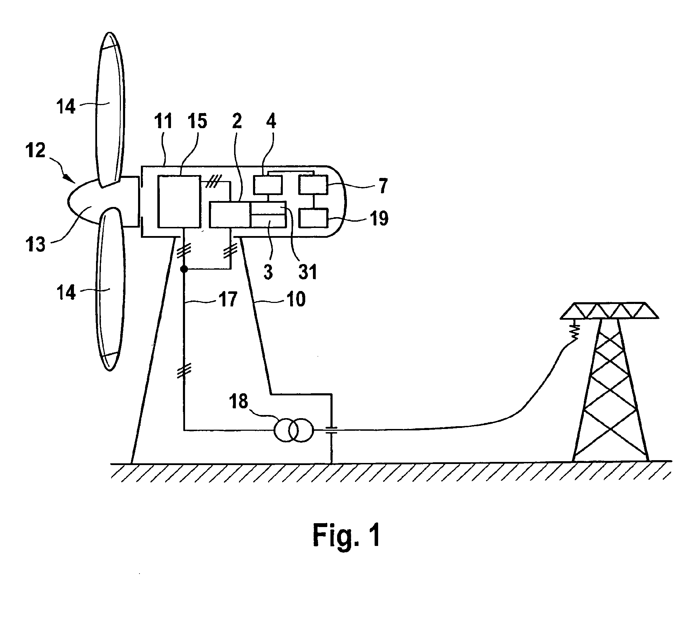

Ein Ausführungsbeispiel für eine Windenergieanlage gemäß der Erfindung ist in Figur 1 dargestellt. Sie umfasst einen Turm 10, auf dem eine in Azimuthrichtung verschwenkbare Gondel 11 befestigt ist. An ihrer einen Stirnseite ist ein Windrotor 12 drehbar angeordnet. Er umfasst eine Nabe 13 mit einem oder mehreren Rotorblätter 14 und treibt über eine (nicht dargestellte) Rotorwelle einen Generator 15 an. Dieser wandelt die vom Windrotor 12 aus dem Wind erzeugte mechanische Leistung in elektrische Leistung um. Bei dem Generator 15 handelt es sich um eine doppelt gespeiste Asynchronmaschine, es können aber auch andere Generatorbauarten vorgesehen sein, insbesondere Synchronmaschinen. Angeschlossen an den Generator 15 ist ein Umrichter 2. An den Generator 15 und den Umrichter 2 ist eine Leitung 17 angeschlossen, welche die erzeugte elektrische Leistung durch den Turm 10 zu einem am dortigen Fuß angeordnetem Mittelspannungstransformator 18 zur Weiterleitung in ein Netz (nicht dargestellt) transportiert. Ferner ist in der Gondel 11 eine Betriebsteuerung 19 angeordnet, welche den Betrieb der gesamten Windenergieanlage überwacht. Sie ist mit einer Umrichtersteuerung 3 verbunden, welche Steuersignale an den Umrichter 2 anlegt.

Der Generator 15 ist als doppelt gespeiste Asynchronmaschine ausgeführt und umfasst einen Stator und einen Rotor. Die von ihm erzeugte elektrische Leistung wird im Wesentlichen über den Stator und die dort angeschlossenen Leitung 17 abgeführt. Ein Teil der Leistung fließt über den Rotor und den daran angeschlossenen Umrichter 2.

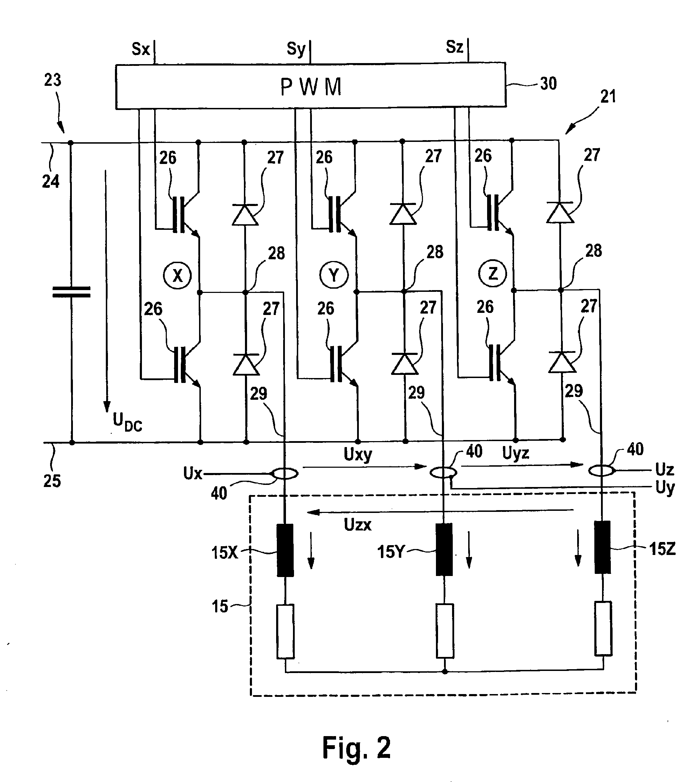

Der Umrichter 2 umfasst einen generatorseitigen Wechselrichter 21 und einen netzseitigen Wechselrichter (nicht dargestellt), die über einen Zwischenkreis 23 miteinander verbunden sind (s. Fig. 2). Der generatorseitige Wechselrichter 21 ist über drei Phasen an den Generator 15 angeschlossen und ist über den Gleichspannungskreis 23 mit dem netzseitigen Wechselrichter verbunden, der wiederum an die Leitung 17 angeschlossen ist. Nicht dargestellt ist der netzseitige Wechselrichter, der vorzugsweise über einen Filterkreis an das elektrische Netz angeschlossen ist. Der Filterkreis ist zweckmäßigerweise so ausgelegt, dass Oberschwingungen des netzseitigen Wechselrichters herausgefiltert werden. Zusätzlich muss der Filterkreis auch so ausgelegt sein, dass es in der Windenergieanlage bei den im Folgenden dargestellten Verfahren nicht zu Resonanzerscheinungen kommt. Es müssen also Schwingungen und Oberschwingungen bei halber oder normaler Schaltfrequenz des generatorseitigen Wechselrichters beachtet werden.

Der Aufbau des generatorseitigen Wechselrichters 21 ist in Fig. 2 dargestellt. Er weist zwei Potentialschienen 24, 25 auf, an welche der Gleichspannungszwischenkreis 23 angeschlossen ist. Die obere Potentialschiene 24 befindet sich auf dem höheren Potential des Zwischenkreises, und die untere Potentialschiene 25 auf dessen niedrigerem Potential, so dass dazwischen die Zwischenkreisspannung anliegt. Die Potentiale im Gleichspannungszwischenkreis 23 sind nicht gegenüber Masse definiert, sondern werden im Potential zueinander bestimmt. Die Differenz der Potentiale der Potentialschienen 24, 25, also die Zwischenkreisspannung, leitet sich dabei von der Ausgangsspannung am netzseitigen Wechselrichter ab und kann gemäß der Formel $U_{DC} = U_{netz} * \sqrt{2} *$ Regelreserve hergeleitet werden.

Beispielsweise beträgt das maximale Potential zwischen den Potentialschienen 24, 25 bei einer Regelreserve von 120% und einer Ausgangsspannung von $U_{netz}$=690V etwa $U_{DC}$=1170V. Gegenüber Masse können die Potentialschienen 24, 25 an sich einen beliebigen Wert annehmen, wobei der Wert nicht konstant über die Zeit sein muss, sondern durch die Taktung des netzseitigen Wechselrichters sehr schnell "hin und her" springen kann. In dem dargestellten Ausführungsbeispiel sei zur Vereinfachung der Erläuterungen das niedrigere Potential auf Masse gelegt und am höheren Potential liegt eine Zwischenkreisspannung $U_{DC}$ von 1100 Volt an.

Zwischen den Potentialschienen 24, 25 sind sechs Schaltelemente 26 angeschlossen, die parallel in drei Gruppen X, Y, Z mit jeweils zwei in Reihe angeordneten Schaltelementen geschaltet sind. Bei den Schaltelementen 26 handelt es sich um beliebige für Wechselrichter geeignete Halbleiter, vorzugsweise um IGBTs. An einem Mittelpunkt 28 jeder Gruppe X, Y, Z sind zwei Freilaufdioden 27 angeordnet, die jeweils antiparallel zu den Schaltelementen 26 geschaltet sind. An die Mittelpunkte 28 ist jeweils eine Phasenleitung 29 angeschlossen, die jeweils mit einer Rotorwicklung 15X, 15Y, 15Z des Generators 15 verbunden ist. Die Phasenleitungen 29 weisen jeweils ein Potential Ux, Uy bzw. Uz auf. Jede der Rotorwicklungen 15X, 15Y, 15Z weist eine Induktivität L und einen Widerstand R auf, die in diesem Beispiel sternförmig verknüpft und durch entsprechende Ersatzelemente dargestellt sind. Die Verhältnisse gelten sinngemäß auch für eine dreieckförmige Verknüpfung, lassen sich dann aber nur schwierig beschreiben. An den Rotorwicklungen 15X, 15Y, 15Z liegt eine Spannung Uxy, Uyz bzw. Uzx an.

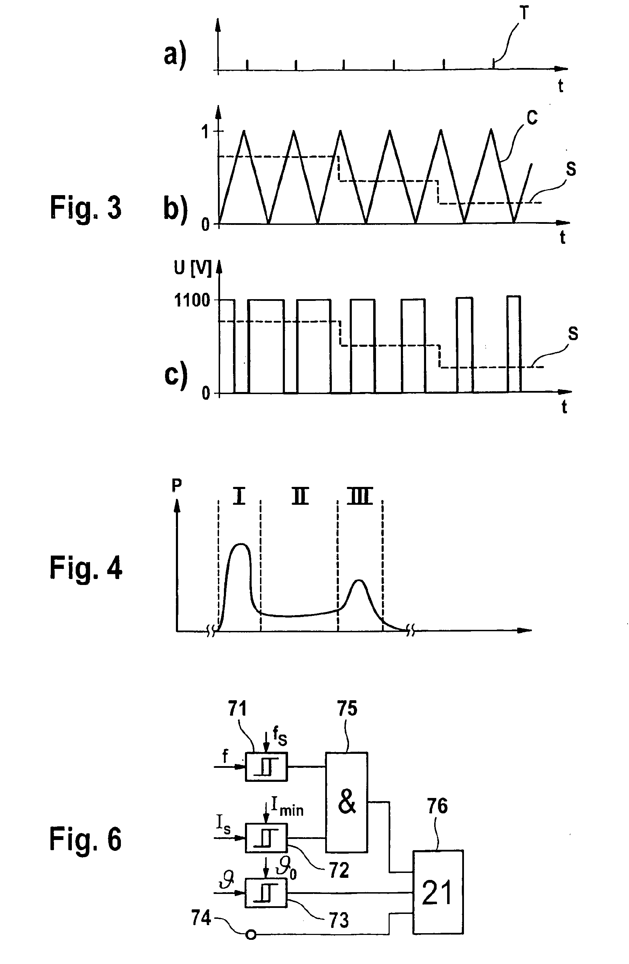

Für die Ansteuerung der Schaltelemente 26 des Umrichters 2 weist die Umrichtersteuerung 3 einen Pulsbreitenmodulator 30 auf. Er ist dazu ausgebildet, in Abhängigkeit von Führungssignalen, welche von der Betriebssteuerung 19 übermittelt werden, Schaltelemente des Umrichters anzusteuern. Er wird mit einer Schaltfrequenz betrieben, die synchron ist mit einer Abtastfrequenz der Betriebssteuerung 19. Die Zeitpunkte für die entsprechenden Schaltfrequenztakte T ergeben sich aus dem Kehrwert der Schaltfrequenz und sind für ein einphasiges Beispiel in Fig. 3a dargestellt. Ein dreiecksförmiges Trägersignal C mit der Schaltfrequenz ist in Fig. 3b dargestellt. Weiter dargestellt ist mit einer gestrichelten Linie ein von der Betriebssteuerung 19 angelegtes Stellgrößensignal S für den Umrichter. Das Trägersignal C wird mit dem Stellgrößensignal S moduliert, indem ein Ansteuersignal immer genau dann unterbrochen wird, wenn das Trägersignal größer als das Stellgrößensignal ist. Das sich so ergebende digitale Ansteuersignal wird als Komplementärsignalpaar an Steuereingänge der Schaltelemente 26 der Gruppen X, Y, Z angelegt. Die entsprechende Phasenleitung 29 erhält damit einen Spannungsverlauf, wie in Fig. 3c dargestellt ist. Man erkennt durch Vergleich mit dem wiederum gestrichelt eingezeichneten ursprünglichen Stellgrößensignal, das die Spannungs-Zeit-Flächen der Signale übereinstimmen. Die an einem tiefpassähnlichen Glied, wie den Rotorwicklungen 15X, 15Y, 15Z, wirksame mittlere Spannung entspricht dann genau dem Stellgrößensignal.

Auf die vorstehend beschriebene Weise werden die Schaltelemente 26 des Wechselrichters 21 betrieben, und an den Phasenleitungen 29 stellen sich dem Stellgrößensignal entsprechende verkettete Spannungen Uxy, Uyz und Uzx ein. Dies ist an sich als pulsbreitenmodulierter Umrichter bekannt und braucht daher nicht weiter beschrieben zu werden.

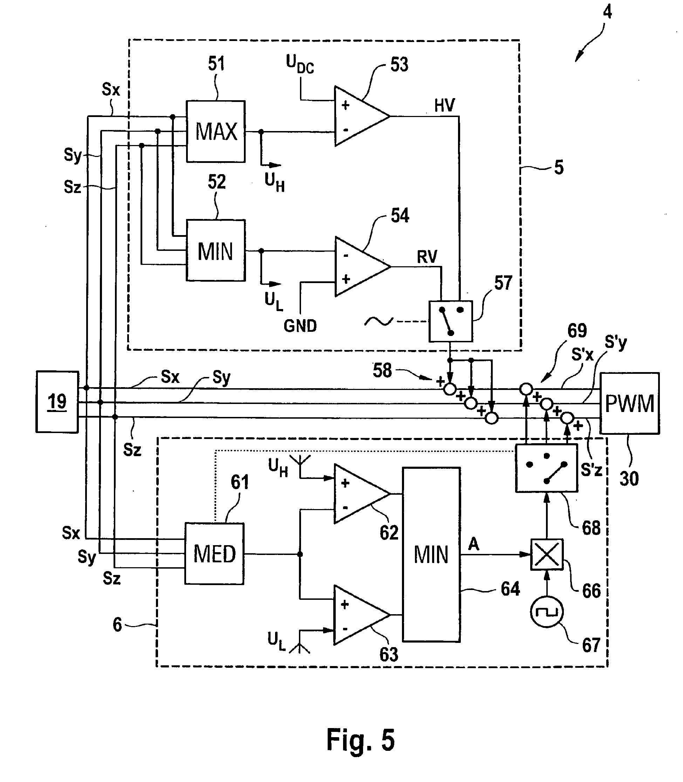

Erfindungsgemäß ist für den Umrichter 2 eine zusätzliche Ansteuerschaltung 4 mit einem Potentialschieber 5 und einem Zusatzspannungsgenerator 6 vorgesehen. Sie ist in Fig. 5 detailliert dargestellt. Als Eingangssignale für die Potentiale in den Phasenleitungen 29 können Spannungssensoren 40 vorgesehen sein, wie in Fig. 2 dargestellt, deren Messwerte als Eingangssignale an den Potentialschieber 5 und den Zusatzspannungsgenerator 6 angelegt sind. Bevorzugt ist es aber, keine direkten Messwerte zu verwenden, sondern stattdessen die Stellgrößensignale Sx, Sy, Sz des Pulsbreitenmodulators 30 auszuwerten.

Der Potentialschieber 5 weist einen Maximumselektor 51 auf, der die Phasenleitung ermittelt, welche den niedrigsten Abstand zu der oberen Potentialschiene aufweist, und mittels einer ersten Berechnungseinheit 53 bestimmt, welche Differenz zwischen dem Potential dieser Phasenleitung (U$_H$) zu dem Potential der oberen Potentialschiene (U$_{DC}$ = 1100 Volt) und daraus einen Hochverschiebungswert HV bestimmt. Entsprechend ist ein Minimumselektor 52 vorgesehen, der die Phasenleitung ermittelt, welche den niedrigsten Abstand zu der unteren Potentialschiene (Masse) aufweist, und eine zweite Berechnungseinheit 54, die bestimmt, welche Differenz zwischen dem Potential dieser Phasenleitung (U$_L$) und der unteren Potentialschiene besteht und daraus einen Runterverschiebungswert RV bestimmt. Damit ist der Wert bestimmt, um welche das Potential der den höchsten Potentialwert aufweisenden Phase (Höchstphase) nach oben verschoben werden muss, um auf das Niveau der oberen Potentialschiene und damit auf die Zwischenkreisspannung angehoben zu werden. Entsprechend ist der Wert bestimmt, um welchen das Potential der den niedrigsten Potentialwert aufweisenden Phase (Tiefstphase) abgesenkt werden muss, um auf das Niveau der unteren Potentialschiene (Massepotential) abgesenkt zu werden. Diese Werte sind wechselweise über ein halbwellensynchronisiertes Schaltglied 57 an Potentialschieber 58 angelegt, welche in einer Halbwelle die Phasenleitungen um den Hochverschiebungswert nach oben und in der folgenden Halbwelle um den Runterverschiebungswert nach unten verschieben.

Notwendigerweise gibt es eine Phase, welche in ihrem Potential zwischen der Höchstphase und der Tiefstphase liegt. Diese Phase (Mittelphase) wird von dem Zusatzspannungsgenerator 6 mittels einer dritten Berechnungseinheit 61 bestimmt, und es wird berechnet, ob das Potential der Mittelphase dichter an dem der Höchstphase (U$_H$) oder an dem der Tiefstphase (U$_L$) liegt. Dazu sind Differenzglieder 62, 63 vorgesehen, welche den Potentialunterschied zu der Höchst- und Tiefstphase berechnen und an einen Minimumdetektor 64 anlegen. Dieser bestimmt den kleineren Wert und gibt ihn als Abstandswert A aus. Dieser Abstandswert A ist an einen Modulator 66 eines Sinusspannungsgenerators 67 angeschlossen, der eine Sinusspannung mit einer dem Abstandswert entsprechenden Amplitude und der Frequenz der Phasenleitungen erzeugt. Über eine Einkoppelschaltung 68 wird anhand eines von der dritten Berechnungseinheit 61 gelieferten Steuersignals (gepunktete Linie in Fig. 5) die Phasenleitung ausgewählt, auf welche die sinusförmige Zusatzspannung mit einem Addierglied 69 aufaddiert werden soll. Es sei angemerkt, dass die Zusatzspannung nicht unbedingt sinusförmig zu sein braucht, sondern für jede Halbwelle als zeitlich konstanter Wert aufgeschaltet wird.

Die derart modifizierten Signale werden als Stellgrößensignale S'x, S'y und S'z an den Pulsbreitenmodulator 30 angelegt.

Dies sei anhand eines Zahlenbeispiels näher erläutert. Angenommen sei ein Umrichter mit einer Zwischenkreisspannung von 1100 Volt und einem ohmschen Widerstand R der Rotorwicklungen von 0,010 Ohm. Als Beispiel sei ein Betriebszustand gewählt, bei dem die Ströme in den einzelnen Phasenleitungen 29 betragen sollen Ix = 500 A, ly = -300 A und Iz = -200 A. Dafür müssen als Spannungen über den Rotorwiderstand 5 V, -3 V bzw. - 2 V angelegt sein. Daraus ergeben sich als verkettete Spannungen Uxy = 8 V, Uyz = -1 V und Uzx = -7 V. Es sei angemerkt, dass es sich bei diesen Werten um Differenzspannungen zwischen den Phasenleitungen 29 handelt, so dass die absolute Lage der Spannungen auf den Phasenleitungen 29 an sich beliebig ist. Häufig wird es so sein, und das sei vorliegend angenommen, dass die Spannungen im Bereich um die Hälfte der Zwischenkreisspannung (U$_{DC}$ = 1100 V) liegen, also etwa um 550 V. Damit ergeben sich für die einzelnen Phasenleitungen Werte von Ux = 555 V, Ux = 547 V und Uz = 548 V.

Auf der Grundlage dieser Wert bestimmt die erste Berechnungseinheit 51 die Phasenleitung X als die mit dem höchsten Potential (U$_H$), und es wird ein Hochverschiebungswert HV von 1100 V - 555 V = 545 V berechnet. Entsprechend bestimmt die zweite Berechnungseinheit 52 die Phasenleitung Uy als die mit dem niedrigsten Potential (U$_L$), und es wird ein Runterverschiebungswert RV von 547 V - O V (Masse) = 547 V berechnet. Die Mittelphase ist dann die mit einer Spannung in Höhe von 548 V. Ihr von den Differenzgliedern 62, 63 berechneter Abstand zur Spannung U$_H$ der Höchstphase beträgt 555 V - 545 V = 7 V und der zur Spannung U$_L$ der Tiefstphase beträgt 548 V -547 V = 1 V. Die Tiefstphase U$_L$ liegt also dichter, und der Abstandswert beträgt somit A = 1 V. Das ist die Amplitude der Zusatzspannung, die von dem Zusatzspannungsgenerator 5 erzeugt und auf die Mittelphase aufgeschaltet wird.

Zusammengefasst ergeben sich damit folgende Werte für eine erste Halbwelle:

| Phase | Spannung | Potentiale der Phasen zueinander: | Status | nach Verschiebung +545V | nach Verschiebung und Addition Zusatzspannung +1V | Potentiale der Phasen zueinander: |
|---|---|---|---|---|---|---|
| X | 555V | Uxy = +8V | höchste | 1100V | 1100V = EIN | Uxy = +8V |
| Y | 547V | Uyz = -1V | tiefste | 1092V | 1092V = TAKT | Uyz = -2V |
| Z | 548V | Uzx = -7V | mittlere | 1093V | 1094V = TAKT | Uzx = -6V |

Dank der Hochverschiebung kann also das Schaltelement 26, welches die Phase X mit der oberen Potentialschiene verbindet, eingeschaltet bleiben (EIN) und braucht nicht getaktet zu werden. Die durch das Takten (TAKT) verursachten Verluste fallen damit für die Phase X weg.

Es wird Bezug genommen auf Fig. 4. Dort dargestellt sind die Verluste, die sich beim Einschalten des Schaltelements 26 (Zeitraum I), im leitenden Zustand des Schaltelements 26 (Zeitraum II) und bei dessen Ausschalten (Zeitraum III) ergeben, wobei zusätzlich die in der Freilaufdiode 27 entstehenden Verluste mit berücksichtigt sind. Dadurch, dass das Schaltelement 26 der Phase X dauernd eingeschaltet bleibt, fallen lediglich die Leitendverluste (II) an, während die betragsmäßig höheren Ein- und Ausschaltverluste (I, III) wegfallen. Die Verluste können damit um fast zwei Drittel verringert werden.

Das Beispiel wird nun fortgeführt für die folgende, zweite Halbwelle. Der Minimumselektor 52 bestimmt die Phasenleitung, welche das niedrigste Potential aufweist. Das ist die Phasenleitung Y mit 547 V, woraus sich mittels der zweiten Berechnungseinheit 52, 54 ein Runterverschiebungswert RV bis zum Potential der unteren Potentialschiene (Masse) von -547 V ergibt. Die Amplitude der Zusatzspannung bleibt unverändert 1 V, ist aber nun in der Phase um 180 Grad gedreht und beträgt somit in vorzeichenrichtiger Darstellung -1 V. Damit ergeben sich folgende Werte für die zweite Halbwelle:

| Phase | Spannung | Potentiale der Phasen zueinander: | Status | nach Verschiebung -547V | nach Verschiebung und Addition Zusatzspannung +1V | Potentiale der Phasen zueinander: |
|---|---|---|---|---|---|---|
| X | 555V | Uxy = +8V | höchste | 8V | 8V = TAKT | Uxy = +8V |
| Y | 547V | Uyz = -1V | tiefste | 0V | 0V = AUS | Uyz = 0V |
| Z | 548V | Uzx = -7V | mittlere | 1V | 0V = AUS | Uzx = -8V |

Die Runterverschiebung in der zweiten Halbwelle führt also dazu, dass die tiefste Phase, Phase Y, auf Massepotential liegt. Dessen Schaltelement 26 kann also ausgeschaltet (AUS) sein und braucht daher nicht zu takten. Die Phase Z, die mittlere Phase, wäre nach der Verschiebung an sich auf einer Spannung von 1 Volt, durch das Hinzufügen der (erfindungsgemäß gewählten) Zusatzspannung von -1 V erzwingt die Erfindung aber ein Absinken auf dasselbe Potential wie die tiefste Phase, die ja dank der erfindungsgemäßen Verschiebung nicht mehr zu takten braucht. Konsequenterweise braucht dank der erfindungsgemäßen Zusatzspannung auch die mittlere Phase nicht mehr zu takten. Damit sind die beiden Schaltelemente 26 für die Phasen Y und Z ungetaktet (AUS), so dass die entsprechenden Umschaltverluste (vgl. Fig. 4) wegfallen.

Über die gesamte Halbwelle gesehen erreicht die Erfindung also durch die Kombination von Hoch-/Runterverschiebung und Zusatzspannung, dass die Schaltelemente 26 aller Phasen X, Y und Z für eine Halbwelle ungetaktet bleiben können, und nur noch in der anderen Halbwelle getaktet betrieben (TAKT) werden müssen. Die durch die Taktung hervorgerufenen Verluste können so dank der Erfindung halbiert werden, was wegen des dominierenden Einfluss der Taktverluste auf die Schaltverluste insgesamt (s. Fig. 4) zu einer beträchtlichen Verringerung der Schaltverluste insgesamt führt. Dank dieser Verringerung kann der Strom entsprechend erhöht werden, wodurch dass Drehmoment am Generator ebenfalls erhöht werden kann. Die Erfindung erlaubt damit eine beträchtliche Erhöhung des Drehmoments auch und gerade bei einem Betrieb im Bereich des Synchronpunkts, der zuvor wegen der Gefahr der Überhitzung der Schaltelemente kaum genutzt werden konnte.

Lärmarmer Betrieb mit geringer Drehzahl im Bereich des Synchronpunkts wird damit auch bei größerer Last ermöglicht.

Der Umrichter 2 braucht nicht die ganze Zeit mit dem erfindungsgemäßen Verfahren betrieben zu werden. Zur Vereinfachung ist es vielmehr gewünscht, dass er über den größten Teil des Betriebsbereichs in herkömmlicher Weise betrieben wird (Normalbetrieb), und nur beim Betreiben in einem kritischen Betriebsbereich das erfindungsgemäße Verfahren (Sonderbetrieb) angewendet wird. Dazu ist ein Umschaltmodul 7 für den Umrichter 2 vorgesehen (s. Fig. 6). Es weist einen Eingang für die Frequenz f in den Phasenleitungen 29 auf und einen Eingang für den von der Betriebssteuerung 19 vorgesehenen Stromsollwert $I_s$ und weiter kann optional ein Eingang für einen Temperatursensor (nicht dargestellt) vorgesehen sein, welcher die Temperatur der Schaltelemente 26 des Umrichters misst. Damit überwacht es die Frequenz in den Phasenleitungen 29, also die auf die Rotorwicklung 15X, 15Y, 15Z des Generators 15 wirkende Frequenz. Befindet sich der Generator 15 im Bereich des Synchronpunkts, d. h. die Frequenz liegt unterhalb eines vorgebbaren Grenzwerts von bspw. einem Frequenzbetrag von 5Hz, und ist gleichzeitig der Stromsollwert oberhalb einer Mindestschwelle, so gibt das Umschaltmodul 7 ein entsprechendes Ausgangssignal an den Umrichter 2 aus, damit dieser das erfindungsgemäße Verfahren durchführt. Dazu weist das Umschaltmodul 7 eine Logikeinheit mit Schwellwertschaltern 71, 72 auf, die durchschalten, wenn sowohl die Frequenz im Bereich des Synchronpunkts $f_s$ liegt als auch der Strom oberhalb einer einstellbaren Schwelle $I_{min}$ liegt (UND-Verknüpfungsglied 75). Optional kann über einen weiteren Schwellwertschalter 73 und ein ODER-Verknüpfungsglied 76 noch das Temperaturmesssignal hinzugefügt werden, so dass unabhängig von dem aktuellen Stromwert bei Überschreitung einer Grenztemperatur $\vartheta_0$ der Schaltelemente 26 das erfindungsgemäße Verfahren angewendet wird. Das Ausgangssignal des Umschaltmoduls 7 ist an die Ansteuerschaltung 4 angeschlossen, welche in Abhängigkeit von dem Ausgangssignal des Betriebsbereichsmoduls 31 auf einen gesonderten Drehzahl-Drehmoment-Bereich umschaltet und so mit dem Potentialschieber 5 und dem Zusatzspannungsgenerator 6 so zusammenwirkt, dass erfindungsgemäß die Potentiale verschoben und die Zusatzspannung hinzugefügt wird. Liegen die Bedingungen an den Eingängen des Umschaltmoduls 7 nicht mehr vor, bspw. weil die Frequenz nunmehr außerhalb des Synchronbereichs liegt, so fällt das Ausgangssignal ab und es wird auf den normalen Betriebsbereich umgeschaltet, so dass der Umrichter 2 im Normalbetrieb läuft.

Das Umschaltmodul 7 weist optional einen Eingangsanschluss 74 auf, an den die Betriebssteuerung 19 angeschlossen sein kann. Wird ein entsprechendes Anforderungssignal an diesen Eingang gelegt, schaltet das Umschaltmodul 7 in den Sonderbetrieb, so dass der Umrichter 2 umgeschaltet wird auf das erfindungsgemäße Verfahren mit den besonderen Betriebsbereich. Dies kann zu einem Test benutzt werden oder bspw. für einen Notbetrieb, wenn eine zusätzliche Stromreserve am Umrichter 2 bereitgestellt werden soll.


**Patentansprüche**

1.  Verfahren zum Betreiben eines Umrichters (2) von Windenergieanlagen, der einen Wechselrichter (21), welcher über mehrere Phasen (x,y,z) einen Generator (15) ansteuert, und einen Zwischenkreis (23) mit einer Zwischenkreisspannung zwischen einem oberen und einem unteren Zwischenkreispotential umfasst, wobei der Generator mit Phasenpotentialen variabler Frequenz angesteuert wird,
    **gekennzeichnet durch**
    Berechnen eines Verschiebungswerts zwischen einem extremen Phasenpotential und einem der Zwischenkreispotentiale,
    Bestimmen eines Abstandswerts des mittleren Phasenpotentials von einem nächsten Zwischenkreispotential,
    Generieren einer Zusatzspannung mit dem Abstandswert als Amplitude,
    wobei die Phasenpotentiale um den Verschiebungswert verschoben werden und die Zusatzspannung zu dem mittleren Phasenpotential aufaddiert wird.

2.  Verfahren nach Anspruch 1,
    **gekennzeichnet durch**
    Berechnen eines Hochverschiebungswerts zwischen einem oberen Zwischenkreispotential und dem höchsten Phasenpotential,
    Berechnen eines Runterverschiebungswerts zwischen dem unteren Zwischenkreispotential und dem tiefsten Phasenpotential,
    wobei das Bestimmen des Abstandswerts des mittleren Phasenpotentials ein Bestimmen eines ersten und zweiten Abstands zu dem höchsten und tiefsten Phasenpotential und ein Bilden eines Minimalabstandswerts umfasst, welcher als Amplitude für das Generieren der Zusatzspannung verwendet wird.

3.  Verfahren nach Anspruch 2,
    **gekennzeichnet durch**
    Verschieben der Phasen um die Hochverschiebung während einer ersten Halbwelle und Aufaddieren der Zusatzspannung zum mittleren Phasenpotential, und
    Runterverschieben der Phasen in einer zweiten Halbwelle um den Runterverschiebungswert und Subtrahieren der Zusatzspannung von dem mittleren Phasenpotential.

4. Verfahren nach einem der vorhergehenden Ansprüche,
**dadurch gekennzeichnet, dass**
die Zusatzspannung mit der halben Frequenz der am Generator angelegten Spannung erzeugt wird.

5. Verfahren nach einem der vorhergehenden Ansprüche,
**gekennzeichnet durch**
Erkennen eines Betriebs im Bereich des Synchronpunkts und Ausführen der erfindungsgemäßen Verschiebung und des Generierens der Zusatzspannung.

6. Verfahren nach einem der vorhergehenden Ansprüche,
**gekennzeichnet durch**
Ansteuern des Wechselrichters in einer festen Schaltfrequenz.

7. Verfahren nach Anspruch 6,
**dadurch gekennzeichnet, dass**
die Schaltfrequenz synchron zu einer Ansteuerschaltung getaktet ist.

8. Umrichter für Windenergieanlagen, der einen Wechselrichter (21), welcher mehrere Phasen (X, Y, Z) zum Anschließen eines Generators (15) aufweist und der von einer Ansteuerschaltung (4) getaktet ist, und einen Zwischenkreis (23) umfasst, der eine Zwischenkreisspannung zwischen einem oberen und unteren Zwischenkreispotential aufweist,
**dadurch gekennzeichnet, dass**
ein Potentialschieber (5) und ein Zusatzspannungsgenerator (6) vorgesehen sind, wobei der Potentialschieber (5) dazu ausgebildet ist, einen Verschiebungswert zwischen einem extremen Phasenpotential und einem der Zwischenkreispotentiale zu berechnen, und der Zusatzspannungsgenerator (6) dazu ausgebildet ist, einen Abstandswert (A) des mittleren Phasenpotentials von dem nächsten Zwischenkreispotential zu bestimmen und eine Zusatzspannung mit dem Abstandswert (A) als Amplitude zu generieren.

9. Umrichter nach Anspruch 8,
**dadurch gekennzeichnet, dass**
ein Umschaltmodul (7) vorgesehen ist, an dessen Eingänge Signale für die Frequenz und vorzugsweise für einen Sollstrom angelegt sind und das dazu ausgebildet ist, einen Betrieb im Bereich des Synchronpunkts zu erkennen und ein entsprechendes Umschaltsignal auszugeben.

10. Umrichter nach Anspruch 8 oder 9,
**dadurch gekennzeichnet, dass**
der Potentialschieber (5) und der Zusatzspannungsgenerator (6) dazu ausgebildet sind, ein Verfahren nach einem der Ansprüche 1 bis 7 auszuführen.

11. Windenergieanlage mit einem Generator (15), einem Umrichter (2) und einer Betriebssteuerung, wobei die Betriebssteuerung mindestens ein Führungssignal an den Umrichter (2) anlegt,
wobei der Umrichter einen Wechselrichter (21), welcher mehrere Phasen (X, Y, Z) zum Anschließen eines Generators (15) aufweist und von einer Ansteuerschaltung (4) getaktet ist, und einen Zwischenkreis (23) umfasst, der eine Zwischenkreisspannung zwischen einem oberen und unteren Zwischenkreispotential aufweist,
**dadurch gekennzeichnet, dass**
für den Umrichter ein Betriebsbereichsmodul (31) vorgesehen ist, das mit einem Potentialschieber (5) und einem Zusatzspannungsgenerator (6) zusammenwirkt, wobei der Potentialschieber (5) dazu ausgebildet ist, einen Verschiebungswert zwischen einem extremen Phasenpotential und einem der Zwischenkreispotentiale zu berechnen, und der Zusatzspannungsgenerator (6) dazu ausgebildet ist, einen Abstandswert (A) des mittleren Phasenpotentials von dem nächsten Zwischenkreispotential zu bestimmen und eine Zusatzspannung mit dem Abstandswert (A) als Amplitude zu generieren.

12. Windenergieanlage nach Anspruch 11,
**dadurch gekennzeichnet, dass**
ein Umschaltmodul (7) vorgesehen ist, an dessen Eingänge Signale für die Frequenz und vorzugsweise für einen Sollstrom angelegt sind und das dazu ausgebildet ist, einen Betrieb im Bereich des Synchronpunkts zu erkennen und ein entsprechendes Umschaltsignal an das Betriebsbereichsmodul (31) auszugeben.

**13.** Windenergieanlage nach Anspruch 11 oder 12,
**dadurch gekennzeichnet, dass**
der Potentialschieber (5) und der Zusatzspannungsgenerator (6) dazu ausgebildet sind, ein Verfahren nach einem der Ansprüche 1 bis 7 auszuführen.

**Claims**

**1.** Method for operation of a converter (2) of wind energy installations, which comprises an inverter (21) which drives a generator (15) via a plurality of phases (X, Y, Z), and an intermediate circuit (23) having an intermediate-circuit voltage between an upper and a lower intermediate-circuit potential, with the generator being driven with phase potentials at a variable frequency,
**characterized by**
calculation of a shift value between an extreme phase potential and one of the intermediate-circuit potentials,
determination of a separation value between the middle phase potential and the closest intermediate-circuit potential,
generation of an additional voltage using the separation value as amplitude,
with the phase potentials being shifted through the shift value, and with the additional voltage being added to the middle phase potential.

**2.** Method according to Claim 1,
**characterized by**
calculation of an up-shift value between an upper intermediate-circuit potential and the highest phase potential,
calculation of a down-shift value between the lower intermediate-circuit potential and the lowest phase potential,
with the process of determining the separation value of the middle phase potential comprising determination of a first and a second separation to the highest and lowest phase potential and formation of a minimum separation value, which is used as the amplitude for generation of the additional voltage.

**3.** Method according to Claim 2,
**characterized by**
shifting of the phases through the up-shift during a first half-cycle, and addition of the additional voltage to the middle phase potential, and down-shifting of the phases in a second half-cycle through the down-shift value, and subtraction of the additional voltage from the middle phase potential.

**4.** Method according to one of the preceding claims,
**characterized in that**
the additional voltage is produced at half the frequency of the voltage at the generator.

**5.** Method according to one of the preceding claims,
**characterized by**
identification of operation in the region of the synchronization point and carrying out the shift according to the invention and the generation of the additional voltage.

**6.** Method according to one of the preceding claims,
**characterized by**
the inverter being driven at a fixed switching frequency.

**7.** Method according to Claim 6,
**characterized in that**
the switching frequency is clocked in synchronism with a drive circuit.

**8.** Converter for wind energy installations, which comprises an inverter (21) which has a plurality of phases (X, Y, Z) for connection of a generator (15) and is clocked by a drive circuit (4), and an intermediate circuit (23) which has an intermediate-circuit voltage between an upper and a lower intermediate-circuit potential,
**characterized in that**
a potential shifter (5) and an additional-voltage generator (6) are provided, with the potential shifter (5) being designed to calculate a shift value between an extreme phase potential and one of the intermediate-circuit potentials, and with the additional-voltage generator (6) being designed to determine a separation value (A) of the middle phase potential from the closest intermediate-circuit potential, and to generate an additional voltage with the separation value (A) as amplitude.

9.  Converter according to Claim 8,
    **characterized in that**
    a switching module (7) is provided, to whose inputs signals for the frequency and preferably for a nominal current are applied, and which is designed to identify operation in the region of the synchronization point, and to emit an appropriate switching signal.

10. Converter according to Claim 8 or 9,
    **characterized in that**
    the potential shifter (5) and the additional-voltage generator (6) are designed to carry out a method according to one of Claims 1 to 7.

11. Wind energy installation having a generator (15), a converter (2) and an operating control system, with the operating control system applying at least one reference signal to the converter (2), wherein the converter comprises an inverter (21) which has a plurality of phases (X, Y, Z) for connection of a generator (15) and is clocked by a drive circuit (4), and an intermediate circuit (23) which has an intermediate-circuit voltage between an upper and a lower intermediate-circuit potential,
    **characterized in that**
    an operating-range module (31) is provided for the converter and interacts with a potential shifter (5) and an additional-voltage generator (6), with the potential shifter (5) being designed to calculate a shift value between an extreme phase potential and one of the intermediate-circuit potentials, and with the additional-voltage generator (6) being designed to determine a separation value (A) of the middle phase potential from the closest intermediate-circuit potential, and to generate an additional voltage with the separation value (A) as amplitude.

12. Wind energy installation according to Claim 11,
    **characterized in that**
    a switching module (7) is provided, to whose inputs signals for the frequency and preferably for a nominal current are applied, and which is designed to identify operation in the region of the synchronization point, and to emit an appropriate switching signal to the operating-range module (31).

13. Wind energy installation according to Claim 11 or 12,
    **characterized in that**
    the potential shifter (5) and the additional-voltage generator (6) are designed to carry out a method according to one of Claims 1 to 7.

## Revendications

1.  Procédé d'utilisation d'un convertisseur (2) de centrales à énergie éolienne qui comprend un onduleur (21), qui commande un générateur (15) par le biais de plusieurs phases (X, Y, Z), et un circuit intermédiaire (23) ayant une tension de circuit intermédiaire entre un potentiel de circuit intermédiaire supérieur et un potentiel inférieur, étant entendu que le générateur est commandé au moyen de potentiels de phase à fréquence variable,
    **caractérisé par**
    le calcul d'une valeur de décalage entre un potentiel de phase extrême et l'un des potentiels du circuit intermédiaire, la détermination d'une valeur d'écart du potentiel de phase médian par rapport à un potentiel du circuit intermédiaire le plus proche,
    la génération d'une tension supplémentaire ayant la valeur d'écart comme amplitude,
    étant entendu que les potentiels de phase sont décalés de la valeur de décalage et que la tension supplémentaire est additionnée au potentiel de phase médian.

2.  Procédé selon la revendication 1,
    **caractérisé par**
    le calcul d'une valeur de décalage vers le haut entre un potentiel de circuit intermédiaire supérieur et le potentiel de phase le plus élevé,
    le calcul d'une valeur de décalage vers le bas entre le potentiel de circuit intermédiaire inférieur et le potentiel de phase le plus faible,
    étant entendu que la détermination de la valeur d'écart du potentiel de phase médian comprend une détermination d'un premier et d'un deuxième écart par rapport au potentiel de phase le plus élevé et le plus faible et une formation d'une valeur d'écart minimale qui est utilisée comme amplitude pour la génération de la tension supplémentaire.

3. Procédé selon la revendication 2,
   **caractérisé par**
   le décalage des phases du décalage vers le haut pendant une première demi-onde et l'addition de la tension supplémentaire au potentiel de phase médian, et
   le décalage vers le bas des phases pendant une deuxième demi-onde de la valeur de décalage vers le bas et la soustraction de la tension supplémentaire du potentiel de phase médian.

4. Procédé selon l'une des revendications précédentes,
   **caractérisé**
   **en ce que** la tension supplémentaire est produite avec la demi-fréquence de la tension appliquée au niveau du générateur.

5. Procédé selon l'une des revendications précédentes,
   **caractérisé par**
   la reconnaissance d'un fonctionnement dans la zone du point synchrone et la réalisation du décalage selon l'invention et de la génération de la tension supplémentaire.

6. Procédé selon l'une des revendications précédentes,
   **caractérisé par**
   la commande de l'onduleur dans une fréquence de commutation fixe.

7. Procédé selon la revendication 6,
   **caractérisé**
   **en ce que** la fréquence de commutation est cadencée de façon synchrone par rapport à une commutation de commande.

8. Convertisseur pour centrales à énergie éolienne, qui comprend un onduleur (21), qui présente plusieurs phases (X, Y, Z) pour le raccordement d'un générateur (15) et qui est cadencé par une commutation de commande (4), et un circuit intermédiaire (23), qui présente une tension de circuit intermédiaire entre un potentiel de circuit intermédiaire supérieur et un potentiel inférieur,
   **caractérisé**
   **en ce qu'**il est prévu une vanne de potentiel (5) et un générateur de tension supplémentaire (6), étant entendu que la vanne de potentiel (5) est réalisée de façon à calculer une valeur de décalage entre un potentiel de phase extrême et l'un des potentiels du circuit intermédiaire et que le générateur de tension supplémentaire (6) est réalisé de façon à déterminer une valeur d'écart (A) du potentiel de phase médian par rapport au potentiel de circuit intermédiaire le plus proche et à générer une tension supplémentaire ayant la valeur d'écart (A) comme amplitude.

9. Convertisseur selon la revendication 8,
   **caractérisé**
   **en ce qu'**il est prévu un module de commutation (7) aux entrées duquel des signaux sont adressés pour la fréquence, et de préférence, pour un courant de consigne et qui est réalisé de façon à reconnaître un fonctionnement dans la zone du point synchrone et à émettre un signal de commutation correspondant.

10. Convertisseur selon la revendication 8 ou 9,
    **caractérisé**
    **en ce que** la vanne de potentiel (5) et le générateur de tension supplémentaire (6) sont réalisés de façon à exécuter un procédé selon l'une des revendications 1 à 7.

11. Centrale à énergie éolienne ayant un générateur (15), un convertisseur (2) et une commande de fonctionnement, étant entendu que la commande de fonctionnement adresse au moins un signal de pilotage au convertisseur (2) et étant entendu que le convertisseur est un onduleur (21) qui présente plusieurs phases (X, Y, Z) pour le raccordement d'un générateur (15) et qui est cadencé par une commutation de commande (4) et comprend un circuit intermédiaire (23) qui présente une tension de circuit intermédiaire entre un potentiel de circuit intermédiaire supérieur et un potentiel inférieur,
    **caractérisée**

**en ce qu'**il est prévu pour le convertisseur un module de zone de fonctionnement (31) qui coopère avec une vanne de potentiel (5) et un générateur de tension supplémentaire (6), étant entendu que la vanne de potentiel (5) est réalisée de façon à calculer une valeur de décalage entre un potentiel de phase extrême et l'un des potentiels du circuit intermédiaire et que le générateur de tension supplémentaire (6) est réalisé de façon à déterminer une valeur d'écart (A) du potentiel de phase médian par rapport au potentiel de circuit intermédiaire le plus proche et à générer une tension supplémentaire ayant la valeur d'écart (A) comme amplitude.

12. Centrale à énergie éolienne selon la revendication 11,
    **caractérisée**
    **en ce qu'**il est prévu un module de commutation (7) aux entrées duquel des signaux sont adressés pour la fréquence, et de préférence, pour un courant de consigne et qui est réalisé de façon à reconnaître un fonctionnement dans la zone du point synchrone et à adresser un signal de commutation correspondant au module de zone de fonctionnement (31).

13. Centrale à énergie éolienne selon la revendication 11 ou 12,
    **caractérisée**
    **en ce que** la vanne de potentiel (5) et le générateur de tension supplémentaire (6) sont réalisés de façon à exécuter un procédé selon l'une des revendications 1 à 7.

**Fig. 1**

Fig. 2

Fig. 3

a)

b)

c)

Fig. 4

Fig. 6

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10243602 A